# EUROPEAN PATENT SPECIFICATION

(11) **EP 3 438 861 B1**
(45) Date of publication and mention of the grant of the patent: **05.08.2020**
(21) Application number: 16903244.8
(22) Date of filing: 08.06.2016
(51) Int. Cl.: G06F 21/32, G06F 21/45, G06K 9/00, G06F 21/36

(54) **ELECTRONIC DEVICE AND METHOD FOR SUPERIMPOSING PASSWORD HINT ON BIOMETRIC IMAGE**
ELEKTRONISCHE VORRICHTUNG UND VERFAHREN ZUR ÜBERLAGERUNG EINES PASSWORT-HINWEISES AUF EIN BIOMETRISCHES BILD
DISPOSITIF ÉLECTRONIQUE ET PROCÉDÉ POUR SUPERPOSER UN INDICE DE MOT DE PASSE SUR UNE IMAGE BIOMÉTRIQUE

(30) Priority: 26.05.2016 KR 20160064947
(43) Date of publication of application: 06.02.2019
(73) Proprietor: Samsung Electronics Co., Ltd., Suwon-si, Gyeonggi-do 16677 (KR)
(72) Inventor: SHCHUR, Oleksandr, Kyiv 01021 (UA); YAKISHYN, Yevgen, Kyiv 02099 (UA); KIM, Sun-kyung, Busan 49516 (KR)
(74) Representative: Gulde & Partner
(86) International application number: PCT/KR2016/006018
(87) International publication number: WO 2017/204396

(56) References cited:
- KR-A- 20080 092 789
- KR-A- 20140 017 735
- KR-A- 20150 011 046
- US-A1- 2010 162 386
- US-A1- 2014 119 617
- US-A1- 2014 289 870
- US-A1- 2014 289 870
- Anonymous: "Visual cryptography - Wikipedia", , 10 March 2016 (2016-03-10), XP055538941, Retrieved from the Internet: URL:https://en.wikipedia.org/w/index.php?t itle=Visual_cryptography&oldid=709315072 [retrieved on 2019-01-08]

## Description

### TECHNICAL FIELD

The present disclosure relates to electronic devices and methods for the electronic devices, and more particularly, to electronic devices using biometric information of a user and methods for the electronic devices.

### BACKGROUND ART

Biometrics is an authentication method of extracting and informatizing unique biometric information of an individual such as a fingerprint, voice, face, iris, sweat gland structure, and blood vessel that are different for each individual. Individual features such as a face shape, voice, fingerprint, eyeball, etc., may not be used like a key or a password for theft or duplication by other persons and are less likely to be changed or lost. Thus, they are highly utilized for security purposes.

Recently, technologies for using biometric information for user authentication in relation to electronic devices have been developed. Further, research has been conducted on a method for user authentication in relation to an electronic device, in which a user uses personal biometric information and characters, numbers, graphic patterns, etc. as a password.

US 2014/0289870 A1 discloses a method for obtaining a password hint which requires a user to memorize a received spatial pattern, wherein a password is obtained by applying the memorized spatial pattern hint to an arrangement of characters which includes the plurality of characters of the password and additional characters, wherein the plurality of characters of the password are located within the arrangement of characters according to the spatial pattern.

US 2014/0119617 A1 discloses a system for biometrically authenticating a user which includes: obtaining image data representative of at least one user-associated biometric feature and at least one user-associated identifier, extracting the at least one biometric feature in the image data, extracting the at least one identifier in the image data, performing a search for a reference biometric feature associated with the at least one identifier, comparing the extracted biometric feature with the reference biometric feature, and authenticating the user in accordance with a result of the comparison.

The Wikipedia article "Visual cryptography" provides examples of how multiple overlapping black-and-white same-sized images may reveal new information.

### DESCRIPTION OF EMBODIMENTS

### TECHNICAL PROBLEM

Provided are methods and devices for providing a password hint based on biometric information of a user of an electronic device when the user loses a password including characters, numbers, graphic patterns, etc. for user authentication.

Provided are methods and devices for setting a unique graphic pattern password for a user of an electronic device by using biometric information unique to the user.

### SOLUTION TO PROBLEM

According to an aspect of the present disclosure, an electronic device includes a capturer configured to acquire an image including at least a part of a user's body; a controller configured to extract biometric information of a user from the acquired image, recognize a segment of a character password from the biometric information in case a predetermined password is the character password, wherein the character password includes at least one of a character and a symbol, and acquire a password hint based on the recognized segment of the character password and the predetermined password and; and a display configured to display and overlap the password hint and the acquired image such that a synthesized character password is displayed.

The controller may be configured to acquire the password hint including a segment of the predetermined password based on the biometric information and the predetermined password.

The controller may be configured to recognize a segment of a character password from the biometric information when the predetermined password is the character password, synthesize the biometric information and the character password to match the biometric information and the character password with the recognized segment, and determine the password hint based on a part of the synthesized character password excluding a part corresponding to the recognized segment.

The controller may be configured to determine the password hint when the recognized segment and the password hint are simultaneously displayed such that the synthesized character password is displayed.

The display is configured to overlap and display the password hint and the acquired image.

The display may be configured to display the password hint on the electronic device when the recognized segment is displayed on an external device worn by the user.

The controller may be configured to determine positions of an intersection point and a node of a graphic pattern password based on positions of at least one intersection point and a node included in the biometric information.

The controller may be configured to determine the password hint based on positions of at least one intersection point and a node included in a graphic pattern password in case the predetermined password is the graphic pattern password.

The capturer may include at least one of an optical system and an infrared ray capturer.

The biometric information may include at least one of a palm line and a blood vessel.

According to another aspect of the present disclosure, a method for an electronic device includes acquiring an image including at least a part of a user's body; extracting biometric information of a user from the acquired image; recognizing a segment of a character password from the biometric information in case a predetermined password is the character password, wherein the character password includes at least one of a character and a symbol; acquiring a password hint based on the recognized segment of the character password and the predetermined password; and overlapping and displaying the password hint and the acquired image such that a synthesized character password is displayed.

The acquiring of the password hint may include
acquiring the password hint including a segment of the predetermined password based on the biometric information and the predetermined password.

The acquiring of the password hint may include
recognizing a segment of a character password from the biometric information when the predetermined password is the character password; synthesizing the biometric information and the character password to match the biometric information and the character password with the recognized segment; and determining the password hint based on a part of the synthesized character password excluding a part corresponding to the recognized segment.

The determining of the password hint may include
determining the password hint when the recognized segment and the password hint are simultaneously displayed such that the synthesized character password is displayed.

The displaying of the password hint includes
capturing an image including the user's body; and
overlapping and displaying the password hint and the captured image.

The displaying of the password hint may include
displaying the password hint on the electronic device when the recognized segment is displayed on an external device worn by the user.

The method may further include
determining positions of an intersection point and a node of a graphic pattern password based on positions of at least one intersection point and a node included in the extracted biometric information.

The acquiring of the password hint may include
determining the password hint based on positions of at least one intersection point and a node included in a graphic pattern password when the predetermined password is the graphic pattern password.

The method may further include deleting the acquired image including the user's body after acquiring the password hint.

According to another aspect of the present disclosure, a computer-readable recording medium having recorded thereon a program for performing a method for an electronic device in a computer is provided.

### ADVANTAGEOUS EFFECTS OF DISCLOSURE

According to embodiments, when a user of an electronic device loses a password including a character, a number, or a graphic pattern for user authentication, the user may use his/her biometric information to obtain a hint about the password.

According to embodiments, a graphic pattern password unique to each user of an electronic device may be set by using unique biometric information of the user.

### BRIEF DESCRIPTION OF DRAWINGS

FIG. 1 is a diagram showing an electronic device according to an embodiment acquiring biometric information.
FIG. 2 is a block diagram of an electronic device according to an embodiment.
FIG. 3 is a block diagram of an electronic device according to an embodiment.
FIG. 4 is a block diagram of an electronic device according to an embodiment.
FIG. 5 is a flowchart of an operating method of an electronic device according to an embodiment.
FIG. 6 is a diagram illustrating an electronic device according to an embodiment acquiring a password hint.
FIG. 7 is a diagram illustrating an electronic device displaying a password hint, according to an embodiment.
FIG. 8 is another diagram illustrating an electronic device acquiring a password hint, according to an embodiment.
FIG. 9 is another diagram illustrating an electronic device displaying a password hint.
FIG. 10 is a block diagram of an electronic device according to an embodiment, an external device, and a server.
FIG. 11 is a diagram illustrating an electronic device acquiring a password hint, according to an embodiment.
FIG. 12 is a diagram illustrating an external device displaying a partial segment of a password and an electronic device displaying a password hint, according to an embodiment.
FIG. 13 is another flowchart of an operating method of an electronic device according to an embodiment.
FIG. 14 shows an electronic device determining an intersection point and a node of a graphic pattern password, according to an embodiment;
FIG. 15 shows an electronic device displaying a password hint and receiving a graphic pattern password input, according to an embodiment.
FIG. 16 is a diagram showing biometric information extracted by an electronic device according to an embodiment.

### MODE OF DISCLOSURE

The attached drawings for illustrating exemplary embodiments of the present disclosure are referred to in order to gain a sufficient understanding of the present disclosure, the merits thereof, and the objectives accomplished by the implementation of the present disclosure. Hereinafter, the present disclosure will be described in detail by explaining exemplary embodiments of the present disclosure with reference to the attached drawings. Like reference numerals in the drawings denote like elements.

While such terms as "first," "second," etc., may be used to describe various components, such components must not be limited to the above terms. The above terms are used only to distinguish one component from another. For example, without leaving the scope of the specifications, a first component may be named as a second component and similarly, the second component may be named as the first component. Description shall be understood to include any and all combinations of one or more of the associated listed items when the items are described by using the conjunctive term "∼ or ∼," "∼ and/or ∼," or the like, whereas descriptions shall be understood to include independent items only when the items are described by using the term "∼ or one of ∼."

The terms used in the present specification are merely used to describe exemplary embodiments, and are not intended to limit the present disclosure. An expression used in the singular encompasses the expression of the plural, unless it has a clearly different meaning in the context. In the present specification, it is to be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

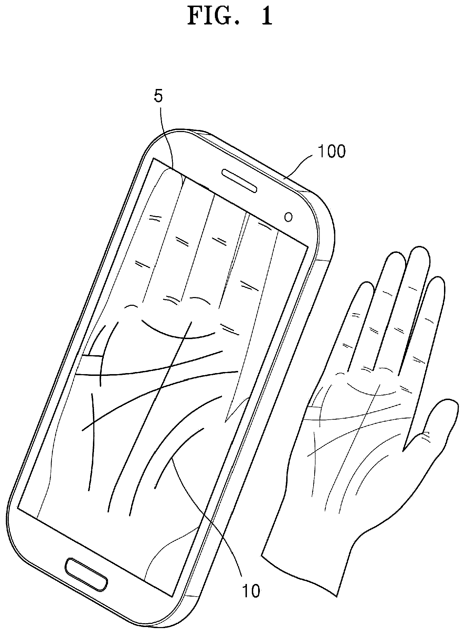

FIG. 1 is a diagram showing an electronic device 100 acquiring biometric information 10, according to an embodiment.

The electronic device 100 may obtain an image 5 including a part of a user's body. Referring to FIG. 1, for example, the electronic device 100 may acquire an image of a user's palm and may extract biometric information 10 of a user from the image 5.

The image 5 including the part of the user's body may be an image including at least one of a user's face, a user's palm, a user's finger, and a user's pupil. Also, the image 5 including the part of the user's body may include a color image, a monochrome image, and an infrared ray image.

Referring to FIG. 1, the electronic device 100 may extract the biometric information 10 from the image 5 including the part of the user's body. For example, the biometric information 10 may include, but is not limited to, a user's facial appearance, a user's palm line, a shape of a user's vein, a user's fingerprint, a user's iris, a user's pupil, etc.

The electronic device 100 may be, for example, a smart phone, a tablet personal computer (PC), a PC, a smart TV set, a personal digital assistant (PDA), a laptop media player, a micro server, a global positioning system (GPS) device, an e-book terminal, a digital broadcasting terminal, a navigation system, a Kiosk, an MP3 player, a digital camera, a wearable device, and other mobile or non-mobile computing devices but is not limited thereto. Also, the electronic device 100 may include an apparatus including an optical system which has a lens and a photographing device, shoots an object, and generates an image. Also, the electronic device 100 may include a virtual reality (VR) device having a communication function, a data processing function, and providing a VR image, an augmented reality (AR) device providing an AR image, a watch, a pair of glasses, a hair band, and a ring.

The electronic device 100 shown in FIG. 1 may acquire a password hint based on the biometric information 10 and a predetermined password. The predetermined password may include a character password and a graphic pattern password.

In the case where a user of the electronic device 100 loses his or her password, the electronic device 100 may provide a hint about the predetermined password by displaying the password hint to the user.

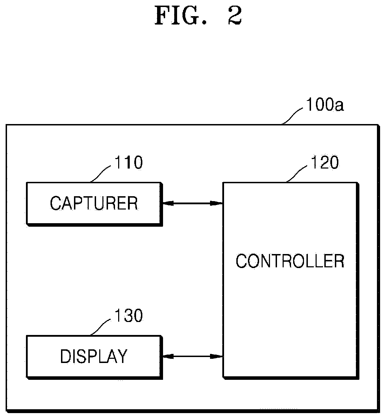

FIG. 2 is a block diagram of an electronic device 100a according to an embodiment.

Referring to FIG. 2, the electronic device 100a may include a capturer 110, a controller 120, and a display 130.

The capturer 110 may acquire an image including a part of a user's body. The image may include a color image and an infrared ray image. The capturer 110 may include at least one of an optical system (not shown) including a lens and an imaging element and capturing a subject and generating an image, and an infrared ray capturer (not shown) generating an infrared ray (IR) image. The capturer 110 may transmit the acquired image to the controller 120.

For example, the capturer 110 may acquire the image including the user's body. According to an embodiment, the capturer 110 may acquire an image including a user's palm. Also, the capturer 110 may acquire an image including a user's palm. Also, the capturer 110 may acquire an image captured to fully include the user's palm.

The controller 120 may extract biometric information of the user from the acquired image. For example, the biometric information may be a wrinkle in the part of the user's body. When the acquired image is an image including the user's palm, the biometric information may be a user's palm line.

The controller 120 may extract the biometric information by using an edge extraction technique. The edge extraction technique is a technique detecting a portion of an image whose brightness changes from a low value to a high value or vice versa. For example, the controller 120 may use a line edge extraction technique among various edge extraction techniques. The line edge extraction technique is an edge extraction technique of detecting the directionality of a point or a line. Specifically, the controller 120 may detect the directionality of lines in 0 degree, 45 degrees, 90 degrees, and 135 degrees directions by applying a line edge extraction technique using four line detection masks.

Also, the controller 120 may acquire a password hint based on the biometric information of the user and a predetermined password.

For example, the password hint may be a segment of the predetermined password. The segment means a part of a password or corresponds to the part of the password. The segment of the predetermined password may include a part of the predetermined password or a part indicating the part of the predetermined password.

For example, when the predetermined password includes a character password, the segment of the predetermined password may include at least one of a stroke of a character included in the character password, two strokes, and a part of one stroke. A shape of the stroke may be identified as a horizontal line, a vertical line, a bent line, a diagonal line, or a curve line. The character password means a password including at least one of a character and a symbol.

Also, when the predetermined password includes the character password, the segment of the predetermined password may be a part of the character password excluding a part matching the biometric information.

In another example, when the predetermined password includes the graphic password, the segment of the predetermined password may include at least one of a position of an intersection point included in the graphic pattern password and a position of a node.

According to an embodiment, when the predetermined password is the character password, the controller 120 may recognize a segment of the character password from the biometric information. The controller 120 may synthesize the biometric information and the character password to match the recognized segment. Also, the controller 120 may determine the password hint based on a part of the synthesized character password excluding a part corresponding to the recognized segment.

Also, when the recognized segment and the password hint are simultaneously displayed, the controller 120 may determine the password hint such that the synthesized character password is displayed.

Also, the controller 120 may determine the position of the intersection point included in the graphic pattern password based on a position of at least one intersection point included in the extracted biometric information.

Also, when the predetermined password is the graphic password, the controller 120 may determine the position of the at least one intersection point included in the graphic password as the password hint.

The display 130 may display the password hint.

Also, the display 130 may display the image including the part of the user's body. The image including the part of the user's body may be an image including at least a part of a user's palm. Also, the image including the part of the user's body may be an image including lines in the user's palm.

The image displayed on the display 130 may include, for example, a color image and an infrared ray image. At this time, the image displayed on the display 130 may be at least one of an image captured by the electronic device 100, an image stored in the electronic device 100, and an image received from an external device. However, the present disclosure is not limited thereto.

The display 130 according to an embodiment may overlap and display the password hint and the image including the part of the user's body. The image including the part of the user's body may be an image including the biometric information. The display 130 may display the password hint such that the synthesized character password is displayed when overlapping and displaying the password hint and the image including the part of the user's body.

Also, the display 130 may display the password hint such that the synthesized character password is displayed when simultaneously displaying the segment recognized from the biometric information and the password hint.

The display 130 may convert an image signal, a data signal, an OSD signal, and a control signal processed by the controller 120 to generate a driving signal. The display 130 may be implemented as a liquid crystal display, a thin film transistor-liquid crystal display, an organic light-emitting diode, a flexible display, etc. Also, the display 130 may be implemented as a 3D display. Also, the display 130 may be configured as a touch screen and used as an input device in addition to an output device.

According to an embodiment, the display 130 may be a high reflectance display. In this case, the display 130 may reflect and display a part of the user's body on a display screen. When displaying the password hint, the display 130 may reflect and display the part of the user's body on the display screen such that the biometric information of the user's body and the password hint may be overlapped and displayed on the screen.

The electronic device 100a according to an embodiment may prevent the predetermined password from being recognized by the user when only the password hint is displayed. When overlapping and displaying the password hint and an image from which the biometric information of the user may be recognized, the electronic device 100a may enable the user to recognize the predetermined password.

That is, when displaying the password hint, the electronic device 100a may provide the password hint to the user only in the case where the electronic device 100a recognizes biometric information matching the previously recognized biometric information of the user.

Further, after acquiring the password hint, the electronic device 100a may delete the acquired image including the at least a part of the user's palm and may not store data of the biometric information of the user. Accordingly, the electronic device 100a may provide the password hint to the user only when acquiring an image from which the biometric information of the user may be recognized again, thereby maintaining security of the password.

Also, the electronic device 100a may provide the password hint of the predetermined password by using the biometric information of the user without any additional device for acquiring the biometric information of the user, and thus no additional cost is required.

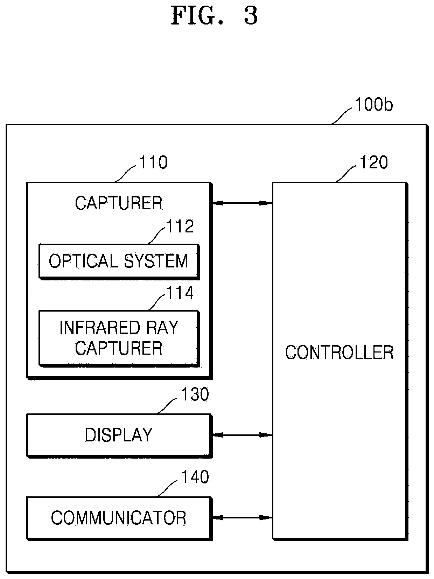

FIG. 3 is a block diagram of an electronic device 100b according to an embodiment.

Referring to FIG. 3, the electronic device 100b according to an embodiment may include the capturer 110, the controller 120, the display 130, and a communicator 140. Redundant descriptions of the capturer 110, the controller 120, and the display 130 shown in FIGS. 2 and 3 will not be repeated.

The capturer 110 may acquire an image including a part of a user's body. The image may include, for example, a color image and an infrared ray image. The capturer 110 according to an embodiment may include an optical system 112 and an infrared ray capturer 114.

The optical system 112 may include a lens and an imaging element to capture a subject and generate an image. The optical system 112 may acquire an image frame such as a still image or a moving image by using the imaging element. The image frame acquired through the imaging element may be processed through the controller 120 or a separate image processor (not shown)

The infrared ray capturer 114 may acquire a signal in an infrared ray region emitted or reflected from a surface of the subject to generate an image. The infrared ray capturer 114 may be configured as an integrated infrared ray sensor.

The communicator 140 may include one or more components that allow communication between the electronic device 100b and an external device (not shown) used by the user or between the electronic device 100b and a server (not shown). For example, the communicator 140 may include a Bluetooth communicator, a BLE (Bluetooth Low Energy) communicator, a Near Field Communication Unit, a WLAN communicator, a Zigbee communicator, an infrared Data Association (IrDA) communicator, a WFD (Wi-Fi Direct) communicator, an UWB (ultra wideband) communicator, an Ant+ communicator, and the like but is not limited thereto.

The communicator 140 may transmit and receive data necessary for providing the password hint using the biometric information of the user to the external device (not shown) of the user or the server (not shown).

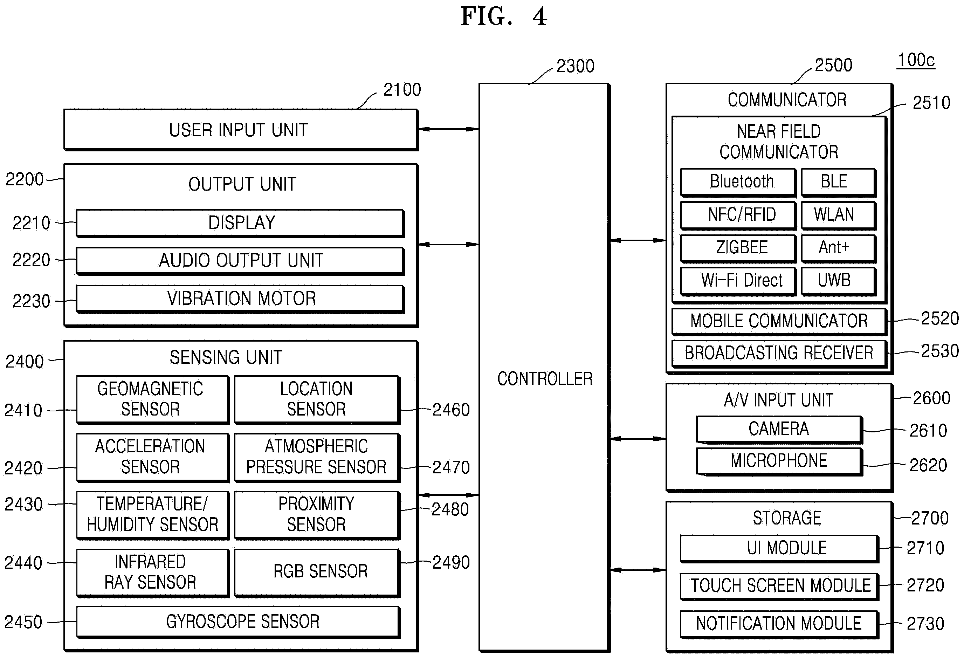

FIG. 4 is a block diagram of the electronic device 100c according to an embodiment.

For example, as illustrated in FIG. 4, the electronic device 110c according to an embodiment may further include a sensing unit 2400, an audio/video (A/V) input unit 2600, and a memory 2700 in addition to a user input unit 2100, an output unit 2200, a controller 2300, and a communicator 2500.

The user input unit 2100 may denote a tool by which the user inputs data to control the electronic device 100c. For example, the user input unit 2100 may include a key pad, a dome switch, a touch pad (a contact type capacitive method, a pressure-type resistive method, an infrared ray detection method, an surface ultrasonic conductivity method, an integral equation type tension measurement method, a piezoelectric effect method, etc.), a jog wheel, a jog switch, etc. but is not limited thereto.

The user input unit 2100 may receive an input of a password from the user. The user input unit 2100 may also receive an input of a type of the password to be inputted by the user.

The output unit 2200 may output an audio signal, a video signal or a vibration signal, and the output unit 2200 may include a display 2210, an audio output unit 2220, and a vibration motor 2230.

The display 2210 may display information processed in the electronic device 100. For example, the display 2210 may display a password hint. Also, the display 2210 may overlap and display the password hint and an image including a part of a user's body.

Meanwhile, when the display 2210 and the touch pad make the touch screen in a layer structure, the display 2210 may be used as an input device in addition to as an output device. The display 2210 may include at least one of a liquid crystal display, a thin film transistor-liquid crystal display, an organic light-emitting diode, a flexible display, a three-dimensional display, and an electrophoretic display. Also, the electronic device 100c may include two or more displays 2210 depending on a realization type of the electronic device 100c. In this case, two or more displays 2210 may face each other via a hinge.

The display 2210 of FIG. 4 may include the display 130 described in FIG. 2.

The audio output unit 2220 may output audio data that is received from the communicator 2500 or stored in the memory 2700. Also, the audio output unit 2220 may output an audio signal related to functions processed in the electronic device 100c (for example, a call signal receiving sound, a message receiving sound, and a notification sound.) Such audio output unit 2220 may include a speaker, a buzzer, etc.

The vibration motor 2230 may output the vibration signal. For example, the vibration motor 2230 may output the vibration signal corresponding to an output of audio data or video data (for example, the call signal receiving sound, the message receiving sound, etc.) Also, the vibration motor 2230 may output the vibration signal when a touch is inputted onto the touch screen.

The controller 2300 may usually control an overall operation of the electronic device 100c. For example, the controller 2300 may generally control the user input unit 2100, the output unit 2200, the sensing unit 2400, the communication 2500, the A/V input unit 2600, etc. by executing programs stored in the memory 2700.

Specifically, the controller 2300 may extract biometric information of the user from the acquired image. Also, the controller 2300 may acquire the password hint based on the biometric information of the user and a predetermined password. The controller 2300 of FIG. 4 may include the controller 120 described with reference to FIG. 2.

The sensing unit 2400 may detect a status of the electronic device 100c or an ambient status of the electronic device 100c, and transfer detected information to the controller 2300.

The sensing unit 2400 may include at least one of a geomagnetic sensor 2410, an acceleration sensor 2420, a temperature/humidity sensor 2430, an infrared ray sensor 2440, a gyroscope sensor 2450, a location sensor 2460 (for example, a global positioning system (GPS)), an atmospheric pressure sensor 2470, a near field sensor 2480, and a red-green-blue (RGB) sensor (illuminance sensor) but is not limited thereto. Since functions of respective sensors may be intuitively inferred and detailed descriptions will be omitted.

The communicator 2500 may include at least one of components which enable communication between the electronic device 100c and an external device (not illustrated) or between the electronic device 100c and a server (not illustrated). For example, the communicator 2500 may include a short-range wireless communicator 2510, a mobile communicator 2520, and a broadcasting receiver 2530.

The short-range wireless communicator 2510 may include a bluetooth communicator, a bluetooth low energy (BLE) communicator, a near field communicator, a wireless local area network (WLAN) or WiFi communicator, a Zigbee communicator, an infrared data association (IrDA) communicator, a Wi-Fi Direct (WFD) communicator, an ultra wideband (UWB) communicator, an Ant+ communicator, etc. but is not limited thereto.

The mobile communicator 2520 may transceive wireless signals to and from at least one of a base station, an external terminal, and a server on a mobile communication network. The wireless signals may include various types of data per transceiving audio call signals, video communication call signals or text/multimedia messages.

The broadcasting receiver 2530 may receive broadcasting signals and/or information related to broadcasting from the outside via broadcasting channels. The broadcasting channels may include satellite channels and ground wave channels. Depending on a type of realization, the electronic device 100c may not include the broadcasting receiver 2530.

Also, the communicator 2500 may transceive data needed for providing hints by using the user's biometric information, to and from the user's external device (not illustrated) or a server(not illustrated).

The A/V input unit 2600 is to input audio signals or video signals, and may include a camera 2610, a microphone 2620, etc. The camera 2610 may acquire image frames such as stationary images or video images via an imaging element at a video call mode or a shooting mode. Images captured by the imaging element may be processed via a controller 2300 or a separate image processor (not illustrated). The camera 2610 according to an embodiment may include the capturer 110 of FIG. 3. Also, the camera 2610 may include the optical system 112 and the infrared ray capturer 114 of FIG. 3.

The image frames processed in the camera 2610 may be stored in the memory 2700 or transmitted to the outside via the communicator 2500. Two or more cameras 2610 may be included depending on a type of a terminal.

The microphone 2620 may receive an input of external audio signals and process it into electrical audio data. For example, the microphone 2620 may receive audio signals from the external device or a speaker. The microphone 2620 may use various noise removing algorithms for removing noise which is generated in a process of receiving an input of the external audio signals.

The memory 2700 may store programs for processing and controlling of the controller 2300, and store data also that is inputted into the electronic device 100c or outputted from the electronic device 100c.

The memory 2700 may include at least one type of storing media such as a flash memory, a hard disk, a multimedia micro-card, a card type memory (for example, secure digital (SD) or extreme digital (XD) memory), a random access memory (RAM), a static random access memory (SRAM), a read-only memory (ROM), an electrically erasable programmable read-only memory(EEPROM), a programmable read-only memory(PROM), a magnetic memory, a magnetic disk, and an optical disk.

Programs stored in the memory 2700 may be classified into a plurality of modules per function and may be, for example, a user interface (Ul) module 2710, a touch screen module 2720, a notification module 2730, etc.

The Ul module 2710 may provide specialized Ul, graphic Ul (GUI), etc., which are linked to the electronic device 100c per application. The touch screen module 2720 may sense the user's touch gesture on the touch screen and transmit information about the touch gesture to the controller 2300. According to an embodiment, the touch screen module 2720 may recognize and analyze a touch code. The touch screen module 2720 may be composed of separate hardware including the controller.

Various sensors may be arranged inside or near the touch screen for detecting the touch on the touch screen or a close touch. A tactile sensor is an example of a sensor for detecting the touch on the touch screen. The tactile sensor may sense the touch of a particular object at a level of human feeling or at a higher level than that. The tactile sensor may detect various information such as roughness of a contact surface, hardness of a contact material, and temperature of a contact point.

Also, the proximity sensor is another example of sensors for detecting the touch on the touch screen. The proximity sensor is a sensor which detects an existence of an object approaching a certain detection surface or an object in the vicinity, without a mechanical contact, via an electromagnetic force or infrared rays. Examples of the proximity sensors are a transparence-type photoelectric sensor, a direct reflection-type photoelectric sensor, a mirror reflection-type photoelectric sensor, a high-frequency oscillation-type proximity sensor, a capacitance-type proximity sensor, a magnet-type proximity sensor, and an infrared ray proximity sensor. Various touch gestures of the user may include a tap, a touch and hold, a double tap, a drag, a fanning, a flick, a drag and drop, a swipe, etc.

The notification module 2730 may generate a signal to notify an event occurrence of the electronic device 100c. Examples of events generated in the electronic device 100c may include receiving a call signal, receiving a message, an input of key signals, and a schedule notification. The notification module 2730 may output the notification signal in a video signal-type via the display 2210 or in an audio signal-type via the audio output unit 2220, or in a vibration signal-type via the vibration motor 2230.

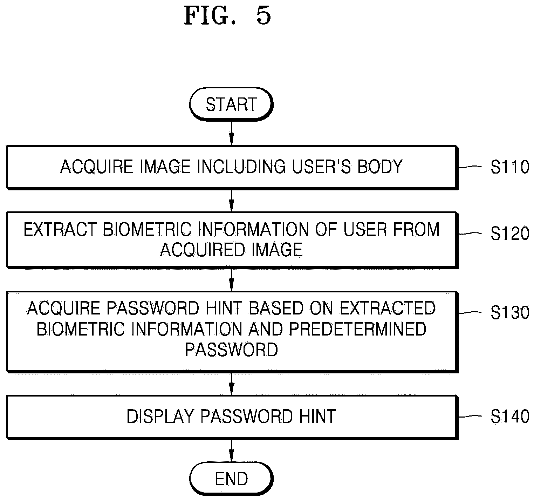

FIG. 5 is a flowchart of an operating method of the electronic device 100 according to an embodiment.

In operation S110, the electronic device 100 may acquire an image including a user's body (S110). For example, the electronic device 100 may acquire an image including a user's palm. Also, the electronic device 100 may acquire an image that includes at least a part of the user's palm.

In operation S120, the electronic device 100 may extract biometric information of the user from the acquired image (S120). For example, the biometric information may be a wrinkle in a part of the user's body. When the acquired image is an image including the user's palm, the biometric information may be a user's palm line.

In operation S130, the electronic device 100 may acquire a password hint based on the extracted biometric information and a predetermined password (S130). When the predetermined password includes a character password, a segment of the predetermined password may be a part of the character password excluding a part matching the biometric information.

In operation S140, the electronic device 100 may display a password hint (S140).

Hereinafter, a specific embodiment in which the electronic device 100 acquires a password hint and provides the acquired password hint will be described.

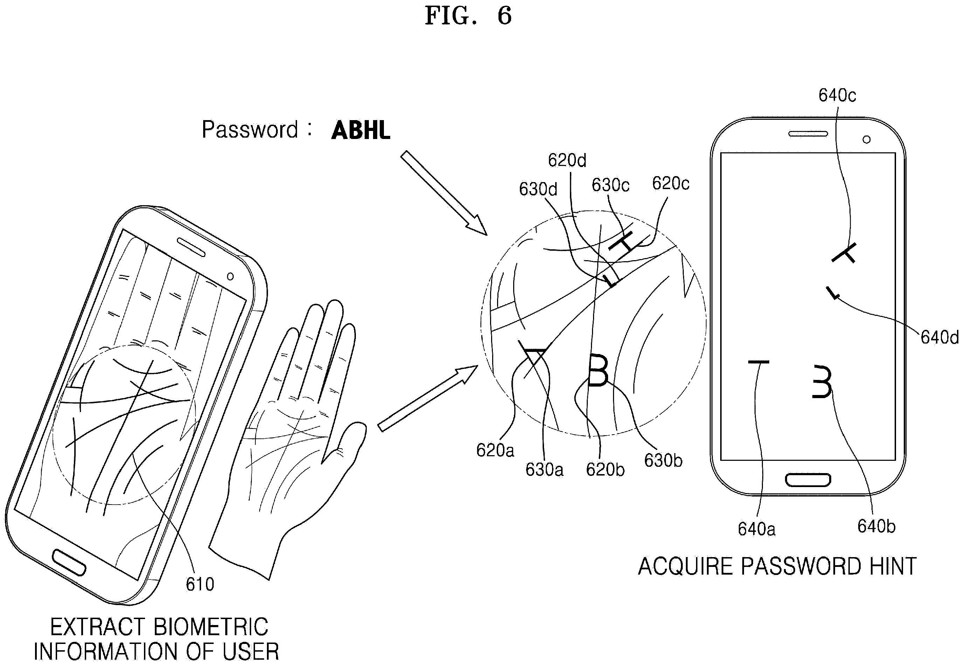

FIG. 6 is a diagram illustrating the electronic device 100 acquiring a password hint according to an embodiment.

Specifically, the electronic device 100 may acquire the password hint based on biometric information 610 and a predetermined password.

Referring to FIG. 6, the electronic device 100 may extract the biometric information 610 of a user from an image including a user's body.

The user's body may include a user's palm. Also, the image including the user's body may be an image captured to fully include the user's palm.

The biometric information 610 may be acquired from at least one of a color image and an infrared ray image. For example, the biometric information 610 may be a palm line acquired from the color image. Also, the biometric information 610 may be a blood vessel acquired from the infrared ray image. Referring to FIG. 6, for example, the biometric information 610 may be a user's palm line.

The electronic device 100 may recognize character password segments 620a, 620b, 620c, and 620d from the biometric information 610 when the preset password is a character password. The segments 620a, 620b, 620c, and 620d of the character password may include at least one of a stroke of a character included in the character password, two strokes, and a part of one stroke. Referring to FIG. 6, the electronic device 100 may recognize the segments 620a, 620b, 620c, and 620d that represent a part of each character included in the character password from the biometric information 610.

Specifically, the predetermined password as shown in FIG. 6 may be ABHL. In this case, the segment 620a is a part representing two strokes included in A, the segment 620b is a part representing one stroke included in B, and the segment 620c is a part representing one stroke included in H, and the segment 620d is a part representing one stroke included in L.

Meanwhile, the order in which the segments 620a, 620b, 620c, and 620d recognized in the biometric information 610 are located in the biometric information 610 may be different from the order of the characters included in the character password. Also, when the predetermined password includes more than four characters, the electronic device 100 may recognize four or more segments.

Also, the electronic device 100 may synthesize the biometric information 610 and the character password to match the segments 620a, 620b, 620c, and 620d. Referring to FIG. 6, when the predetermined password is 'ABHL', the electronic device 100 may synthesize the biometric information 610 and a password 'ABHL' such that characters included in ABHL match the segments 620a, 620b, 620c and 620d respectively. The electronic device 100 may generate the synthesized letters A 620a and 630a, the synthesized letters B 620b and 630b, the synthesized letters H 620c and 630c, and the synthesized letters L 620b and 630d such that the user knows that the predetermined password is ABHL.

Further, the electronic device 100 may determine the password hint based on the parts 630a, 630b, 630c, and 630d among the synthesized character passwords excluding parts corresponding to the recognized segments. Also, the electronic device 100 may display the determined password hints 640a, 640b, 640c, and 640d.

After acquiring the password hint, the electronic device 100 may delete the image including the user's body acquired to extract the biometric information 610 of the user. That is, the electronic device 100 may not store data of the biometric information 610 of the user. Accordingly, the electronic device 100 may prevent other users from acquiring passwords without permission, and thus security of the electronic device 100 may be maintained.

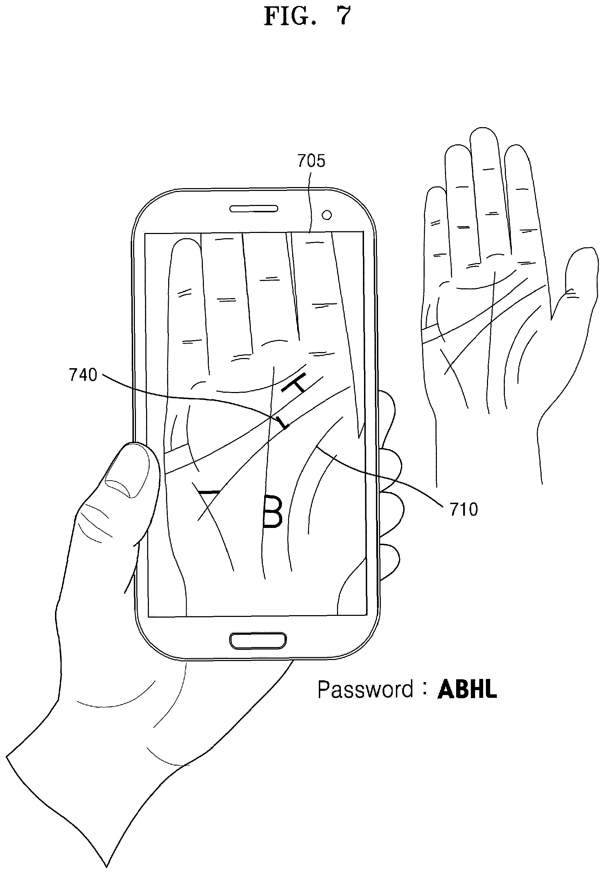

FIG. 7 is a diagram illustrating the electronic device 100 displaying a password hint 740 according to an embodiment.

The electronic device 100 may not provide information about a password to a user when displaying only the password hint 740. The electronic device 100 may provide the user with the information about the password only when the password hint 740 is combined with biometric information 710 of the user of the electronic device 100.

The electronic device 100 may overlap and display the password hint 740 and an image 705 including a user's body. The image 705 including the user's body may be an image obtained by capturing at least a part of a user's palm. At this time, the electronic device 100 may overlap and display the password hint 740 and the image 705 including the part of the user's body such that a synthesized character password is displayed. The image 705 including the part of the user's body is an image different from an image acquired to extract the biometric information 710 of the user.

Specifically, referring to FIG. 7, the electronic device 100 may overlap and display the password hint 740 and the biometric information 710 included in the image 705 including the part of the user's body.

When a current user of the electronic device 100 and a user at the time of acquiring the password hint 740 match, the biometric information 710 may include segments recognized from biometric information acquired in a process of acquiring the password hint 740.

When the current user of the electronic device 100 and the user at the time of acquiring the password hint 740 match, in the case where the biometric information 710 and the password hint 740 are simultaneously displayed, the predetermined password (ABHL in FIG. 7) may be recognized by the user.

Meanwhile, the image 705 including the part of the user's body is an image different from an image acquired to extract the biometric information 710 of the user. The image 705 including the part of the user's body may be a live view image. Also, the image 705 including the part of the user's body may be an image in which the biometric information 710 is displayed more clearly by applying an edge detection technique after capturing the user's palm.

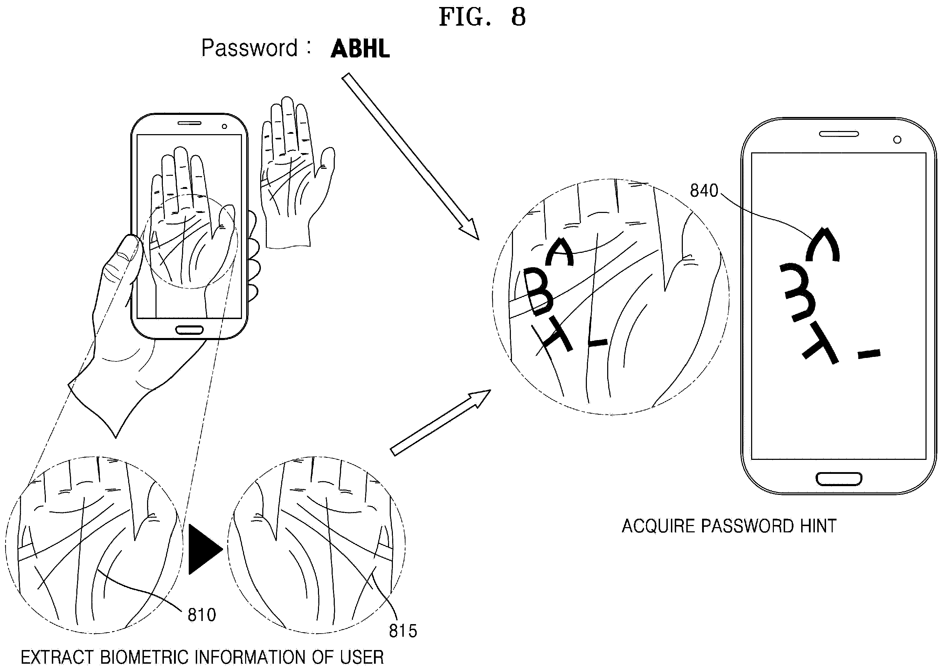

FIG. 8 is another diagram showing the electronic device 100 acquiring a password hint according to an embodiment.

The electronic device 100 according to an embodiment may acquire the password hint based on acquired biometric information 810 and a predetermined password.

Specifically, the electronic device 100 may extract the biometric information 810 of a user from an image including a user's body. Also, the electronic device 100 may generate inverted biometric information 815 by inverting left and right sides of the extracted biometric information 810.

Meanwhile, when the preset password is a character password, the electronic device 100 may recognize a segment 820 of the character password from the inverted biometric information 815. Further, the electronic device 100 may synthesize the inverted biometric information 815 and the character password to match the segment 820. The electronic device 100 may determine the password hint based on a part 830 of the synthesized character password excluding a part corresponding to the recognized segment 820. Also, the electronic device 100 may display the determined password hint 840.

After acquiring the password hint, the electronic device 100 may delete the image including the user's body acquired to extract the biometric information 810 of the user. That is, the electronic device 100 may not store data of the biometric information 810 of the user. Accordingly, the electronic device 100 may prevent other users from acquiring passwords without permission, and thus security of the electronic device 100 may be maintained.

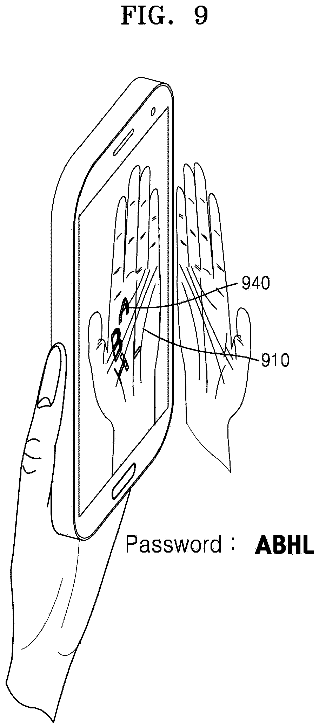

FIG. 9 is a diagram illustrating the electronic device 100 displaying a password hint 940 according to an embodiment.

When displaying only the password hint 940, the electronic device 100 may not provide information about a password to a user. The electronic device 100 may provide the user with the information about the password only when the password hint 940 is combined with biometric information 910 of the user of the electronic device 100.

According to an embodiment, a display surface included in the electronic device 100 may have a high reflectivity. In this case, the electronic device 100 may reflect and display a part of a user's body on a display screen.

Referring to FIG. 9, when displaying the password hint 940, the electronic device 100 may reflect and display the biometric information 910 on the display screen. At this time, the electronic device 100 may overlap and display the biometric information 910 and the password hint 940 on the display screen.

When a current user of the electronic device 100 and a user at the time of acquiring the password hint 940 match, the biometric information 710 may include segments recognized from biometric information acquired in a process of acquiring the password hint 940.

Also, when the current user of the electronic device 100 and the user at the time of acquiring the password hint 940 match, in the case where the biometric information 910 and the password hint 940 are simultaneously displayed, the predetermined password (ABHL in FIG. 9) may be recognized by the user.

According to the embodiment described with reference to FIG. 9, the electronic device 100 may omit a process of capturing the image including the user's body by using a capturer, in order to acquire the password hint 940.

Also, according to the embodiment described with reference to FIG. 9, the screen displayed on the electronic device 100 may be hidden by the user's palm, making it difficult for persons other than the user to view the screen. Accordingly, the electronic device 100 according to the present embodiment may enhance the security effect of the password.

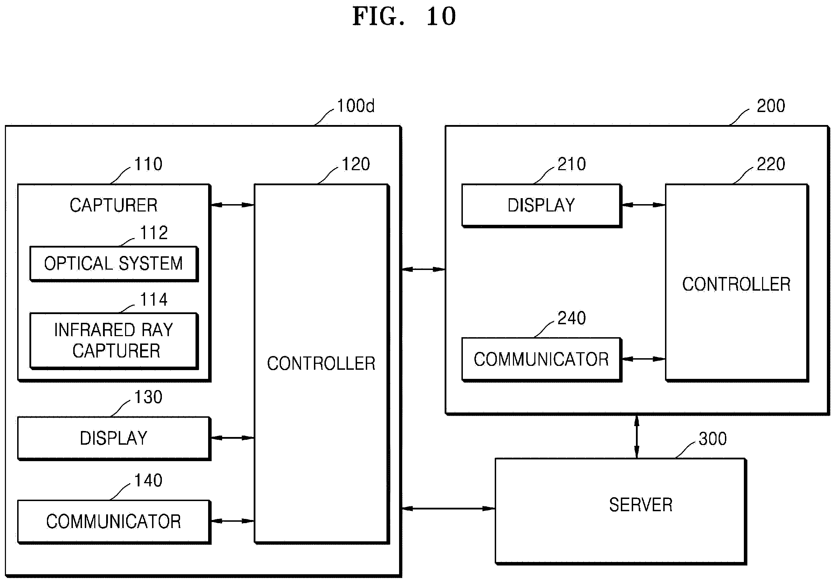

FIG. 10 is a block diagram of an electronic device 100d, an external device 200, and a server 300, according to an embodiment.

The electronic device 100d of FIG. 10 may include all of components of the electronic device 100b of FIG. 3. Redundant descriptions of the electronic device 100d and the electronic device 100b described in FIG. 3 will be omitted.

Referring to FIG. 10, the electronic device 100d is capable of transmitting data to the external device 200 and the server 300 and receiving data from the external device 200 and the server 300.

When some segments of a predetermined password are displayed on the external device 200, the display 130 of the electronic device 100d may display the remaining segments. The display 130 may be implemented as a display having a high reflectance. In this case, the display 130 may reflect and display a screen displayed on the external device 200 to and on a screen of the display 130.

The communicator 140 of the electronic device 100d may exchange data with the external device 200 and the server 300.

Specifically, the communicator 140 of the electronic device 100d may transmit and receive data by using Bluetooth, Bluetooth low energy (BLE), near field communication, WLAN (WiFi), WiFi- Direct (WFD), ultra wideband (UWB), Ant+ or the like.

The communicator 140 of the electronic device 100d may transmit data of some segments of the predetermined password to a communicator 240 of the external device 200. According to an embodiment, some segments of the predetermined password may be a part of a character password matching biometric information of the user.

The external device 200 shown in FIG. 10 may be an external device used by the user of the electronic device 100d.

The external device 200 may include a display 210, a controller 220, and the communicator 240, and may not include a capturer unlike the electronic device 100d. The external device 200 may be wearable glasses, a wearable watch, a wearable camera, a smart phone, a tablet PC, an electronic book terminal, a digital camera, and another mobile or non-mobile computing device but is not limited thereto.

The display 210 of the external device 200 may include a function corresponding to a function of the display 130 of the electronic device 100d. Also, the display 210 of the external device 200 may display some segments of the password.

The communicator 240 of the external device 200 may include functions corresponding to functions of the communicator 140 of the electronic device 100d. The communicator 240 of the external device 200 may receive data of some segments of the password.

The controller 220 of the external device 200 may control operations performed by the display 210 and the communicator 240.

The server 300 may perform some or all of the functions performed by the controller 120 of the electronic device 100d and the controller 220 of the external device 200.

According to an embodiment, the server 300 may receive data of some segments of the predetermined password from the communicator 140 of the electronic device 100d.

Also, the server 300 may store a password hint and data of the predetermined password in a memory (not shown). The server 300 may store the data of some segments of the predetermined password in the memory (not shown). The server 300 may transmit the data of some segments of the predetermined password to the communicator 240 of the external device 200 at the request of the electronic device 100d or the external device 200.

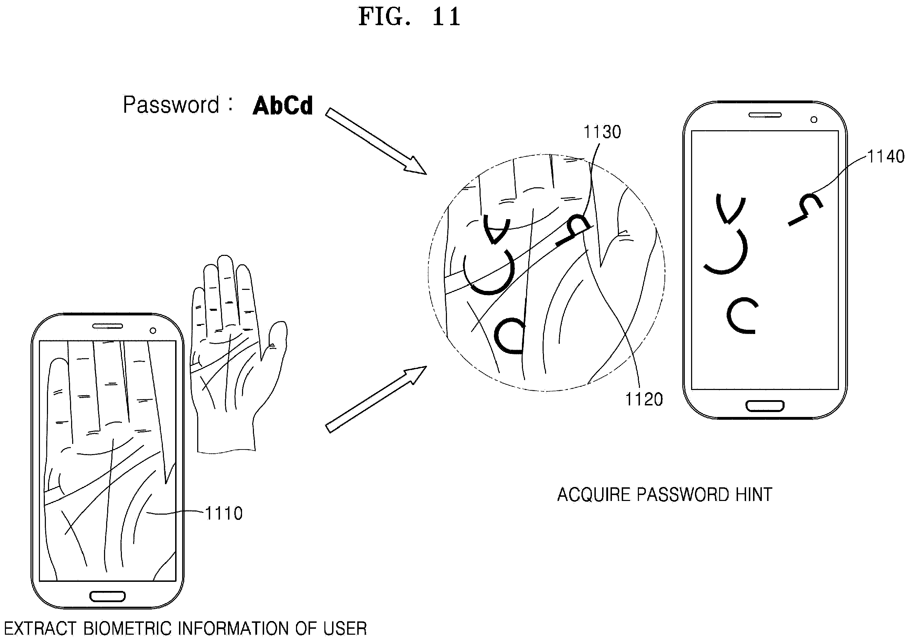

FIG. 11 is a diagram illustrating the electronic device 100 acquiring a password hint 1140 according to an embodiment.

The electronic device 100 may extract biometric information 1110 of a user from an image including a user's body. The electronic device 100 may extract the biometric information 1110 of the user from an image including at least a part of a user's palm.

Referring to FIG. 11, when a predetermined password is a character password, the electronic device 100 may recognize a segment 1120 of the character password from the biometric information 1110. Also, the electronic device 100 may synthesize the biometric information 1110 and the character password to match the recognized segment 1120. Also, the electronic device 100 may determine the password hint 1140 based on a part 1130 of the synthesized character password excluding a part corresponding to the recognized segment 1120. The electronic device 100 may display the password hint 1140.

Meanwhile, the electronic device 100 may transmit data of some segments to an external device (not shown) or a server (not shown). The data of some segments may be data of the segment 1120 recognized from the biometric information 1110. The electronic device 100 may not store the data of some segments after transmitting the data of some segments to the external device (not shown) or the server (not shown).

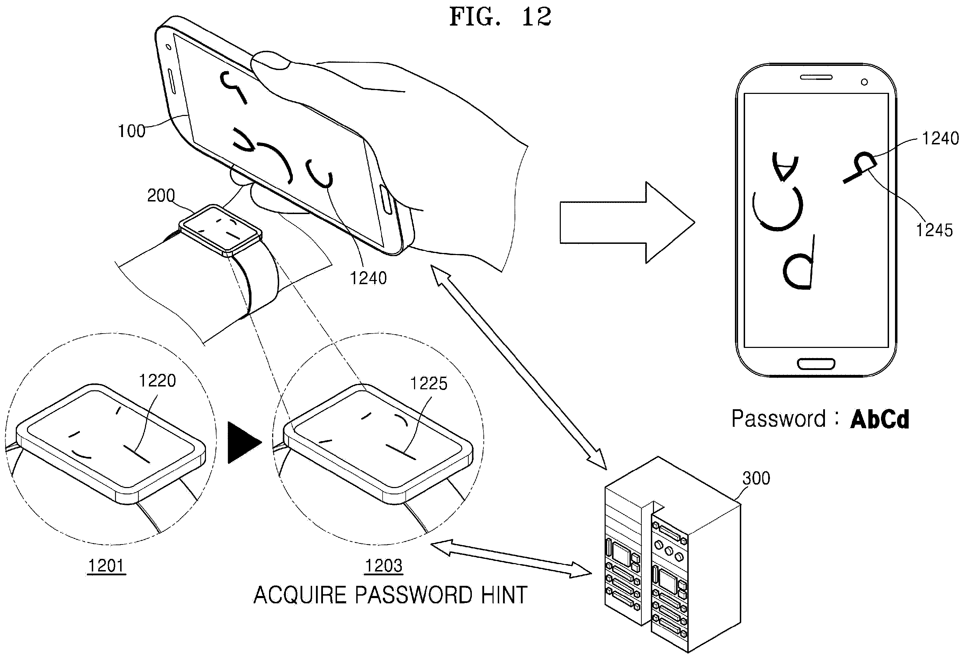

FIG. 12 is a diagram illustrating the external device 200 displaying a partial segment 1220 of a password and the electronic device 100 displaying a password hint 1240, according to an embodiment.

Here, the segment 1220 may correspond to a part of a predetermined password excluding a part corresponding to the password hint 1240.

1201 of FIG. 12 denotes the external device 200 displaying the partial segment 1220 of the password. Also, 1203 in FIG. 12 denotes the external device 200 inverting left and right of the partial segment 1220 and displaying an inverted segment 1225.

The external device 200 may receive the partial segment 1220 of the password from the electronic device 100 at the time of acquiring the password hint 1240 based on biometric information of the user and the predetermined password. The external device 200 may also receive the partial segment 1220 from the external server 300 at the time of acquiring the password hint 1240 based on the biometric information of the user and the predetermined password.

The electronic device 100 or the external server 300 may not store data of the partial segment 1220 after transmitting the data of the partial segment 1220 to the external device 200. Accordingly, the electronic device 100 may enable to maintain security of the password.

The electronic device 100 may reflect and display the partial segment 1220 or the inverted segment 1225 displayed on the external device 200 on a display screen when displaying the password hint 1240, such that the partial segment 1220 or the inverted segment 1225 and the password hint may be overlapped and displayed on the display screen.

Referring to FIG. 12, the external device 200 may display the inverted segment 1225. The electronic device 100 may display the re-inverted segment 1245 by reflecting the inverted segment 1225 displayed by the external device 200 on the screen of the electronic device 100. The electronic device 100 may provide the user with the password hint 1240 by simultaneously displaying the re-inverted segment 1245 and the password hint 1240.

In this case, the user may be provided with the password hint 1240 by using the electronic device 100 and the external device 200 of the user without a separate device acquiring the biometric information.

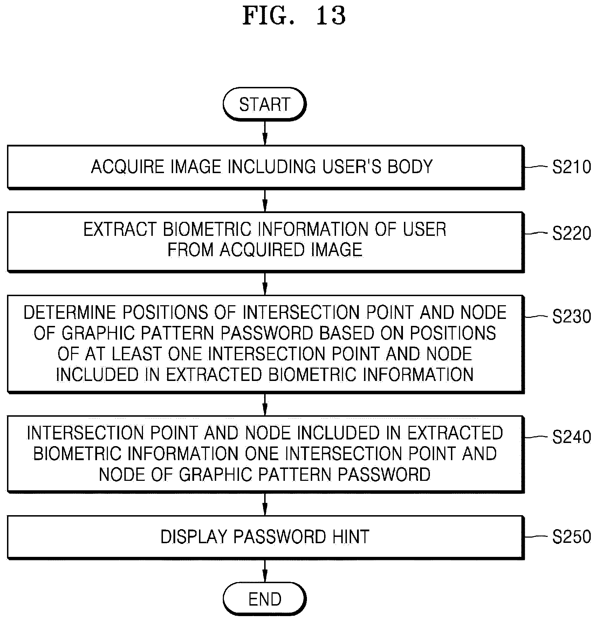

FIG. 13 is another flowchart of an operating method of the electronic device 100 according to an embodiment.

According to an embodiment, security of the electronic device 100 may be maintained by using a graphic pattern password together with a character password.

In operation S210, the electronic device 100 may acquire an image including a user's body (S210).

In operation S220, the electronic device 100 may extract biometric information of a user from the acquired image (S220).

In operation S230, the electronic device 100 may determine positions of an intersection point and a node of the graphic pattern password based on positions of at least one intersection point and a node included in the extracted biometric information (S230).

The electronic device 100 may increase complexity of the graphic pattern password by determining the positions of the intersection point and the node of the graphic pattern password based on the positions of the at least one intersection point and the node included in the biometric information.

In operation S240, the electronic device 100 may determine a password hint based on positions of at least one intersection point and the node of the graphic pattern password (S240).

For example, the electronic device 100 may determine the password hint that indicates positions of at least one intersection point and a node of a predetermined graphic pattern password.

In operation S250, the electronic device 100 may display the password hint (S250).

The electronic device 100 may provide a hint to the user by displaying a password hint that indicates the password hint that indicates the positions of the at least one intersection point and the node of the predetermined graphic pattern password.

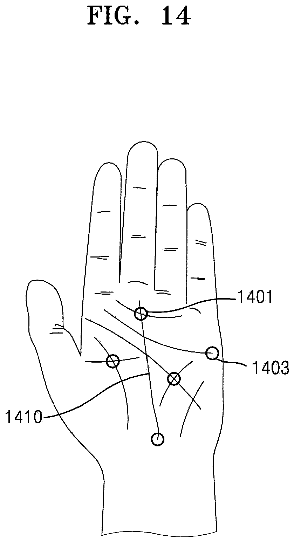

FIG. 14 shows the electronic device 100 determining an intersection point and a node of a graphic pattern password, according to an embodiment.

The electronic device 100 may determine positions of the intersection point and the node of the graphic pattern password based on positions of at least one intersection 1401 and a node 1403 included in extracted biometric information 1410. The extracted biometric information 1410 may include at least one of a palm read acquired from a color image and a blood vessel acquired from an infrared ray image.

The electronic device 100 may receive an input that sets the graphical pattern password based on the positions of the intersection point and the node of the graphic pattern password.

The order of connecting the at least one intersection 1401 and the node 1403 is a part that may be set differently by the user. Also, since the positions of the at least one intersection 1401 and the node 1403 included in the biometric information 1410 extracted for each user are different, the electronic device 100 may increase complexity of the graphic pattern password by determining the positions of the intersection point and the node of the graphic pattern password based on the at least one intersection 1401 and the node 1403 differently determined for each user.

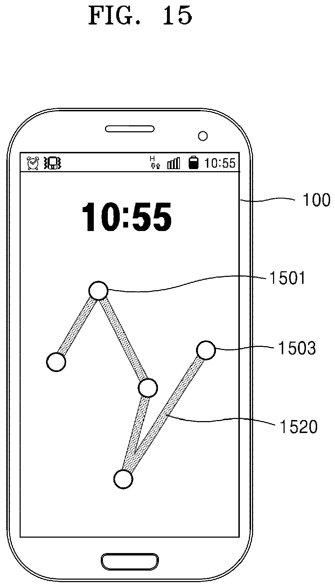

FIG. 15 shows the electronic device 100 displaying a password hint and receiving a graphic pattern password input.

The electronic device 100 may display the password hint that indicates positions of at least one intersection point 1501 and a node 1503 of a predetermined graphic pattern password.

The electronic device 100 may provide the password hint that indicates the at least one intersection point 1501 and the node 1503 of the predetermined graphic pattern password. Also, the electronic device 100 may receive input connecting the at least one intersection point 1501 and the node 1503 as indicated by a connection line 1520, thereby releasing security by the graphical pattern password.

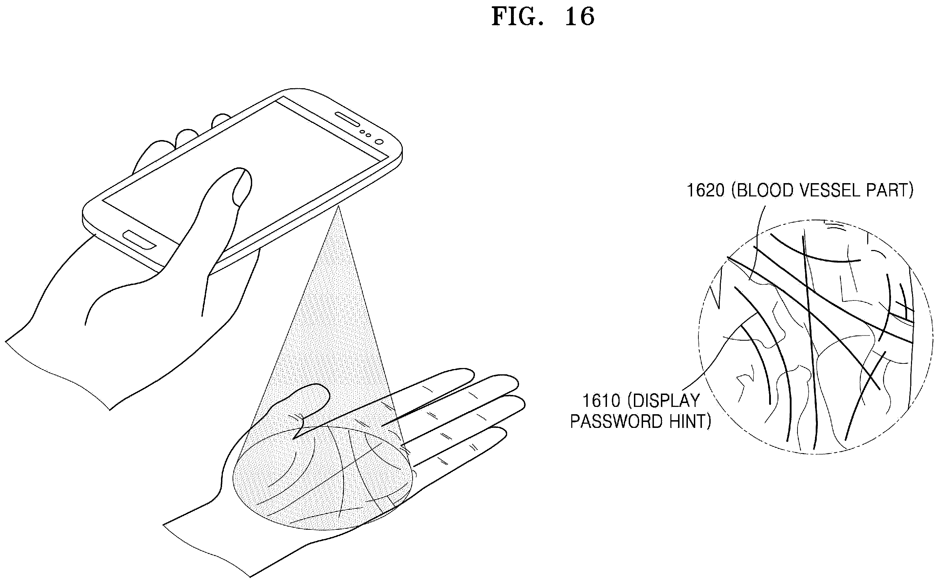

FIG. 16 is a diagram showing biometric information 1610 and 1620 extracted by the electronic device 100 according to an embodiment.

Referring to FIG. 16, the biometric information 1610extracted by the electronic device 100 may be a palm read acquired from a color image, and the biometric information 1620may be a blood vessel acquired from an infrared ray image. For example, the biometric information 1610 may be acquired from an optical system (not shown) of the electronic device 100, and the biometric information 1620 may be acquired from an infrared ray capturer (not shown).

The electronic device 100 may acquire a segment of a more complex character password by simultaneously using the biometric information 1610 and the biometric information 1620 as biometric information.

According to the embodiments above, a display method may be realized in a program code-type executable via various computer methods and may be recorded on a computer readable medium. The computer readable medium may include program codes, data files, data structures, etc., separately or in combinations. Program codes to be recorded on such medium may be particularly designed and configured according to the present disclosure, or any readily available medium publically known to one of ordinary skill in the art of computer software may be used. Examples of the computer readable recording media may include a hard disk, a magnetic medium such as a floppy disk and a magnetic tape, an optical medium such as a CD-ROM and a DVD, a magneto-optical medium such as a floptical disk, and a hardware apparatus, specially configured to store and execute program commands, such as a ROM, a RAM, and a flash memory. Examples of program codes may include not only machine language codes generated by a compiler but also high level language codes executable by the computer via an interpreter, etc.

In the foregoing specification, the present disclosure and advantages have been described with reference to specific embodiments. It will be apparent, however, to those of ordinary skill in the art that various changes and modifications may be readily made without departing from the scope of the present disclosure as set forth in the claims below. The specification and drawings are, accordingly, should be considered in a descriptive sense only and not for purposes of limitation. All such possible modifications are intended to be included within the scope of the present disclosure.

## Claims

1. An electronic device (100) comprising:
a capturer (110) configured to acquire an image (5, 705) comprising at least a part of a user's body;
a controller (120) configured to extract biometric information (710, 810) of a user from the acquired image (5, 705), recognize a segment (620, 820) of a character password from the biometric information (710, 810) in case a predetermined password is the character password, wherein the character password includes at least one of a character and a symbol, and acquire a password hint (740, 840, 940, 1140, 1240) based on the recognized segment (620, 680) of the character password and the predetermined password; and
a display configured to overlap and display the password hint (740, 840, 940, 1140, 1240) and the acquired image (5, 705) such that a synthesized character password is displayed.

2. The electronic device (100) of claim 1, wherein the controller (120) is configured to acquire the password hint (740, 840, 940, 1140, 1240) comprising the segment (620, 820) of the predetermined password based on the biometric information (710, 810) and the predetermined password.

3. The electronic device (100) of claim 1, wherein the controller (120) is configured to synthesize the biometric information (710, 810) and the character password to match the biometric information (710, 810) and the character password with the recognized segment (620, 820), and determine the password hint (740, 840, 940, 1140, 1240) based on a part of the synthesized character password excluding a part corresponding to the recognized segment (620, 820).

4. The electronic device (100) of claim 3, wherein the controller (120) is configured to determine the password hint (740, 840, 940, 1140, 1240) when the recognized segment (620, 820) and the password hint (740, 840, 940, 1140, 1240) are simultaneously displayed such that the synthesized character password is displayed.

5. The electronic device (100) of claim 4, wherein the display is configured to display the password hint (740, 840, 940, 1140, 1240) on the electronic device (100) when the recognized segment (620, 820) is displayed on an external device (200) worn by the user.

6. The electronic device (100) of claim 1, wherein the controller (120) is configured to determine positions of an intersection point (1501) and a node (1403, 1503) of a graphic pattern password based on positions of at least one intersection point (1501) and a node (1403, 1503) included in the biometric information (710, 810).

7. The electronic device (100) of claim 6, wherein the controller (120) is configured to determine the password hint (740, 840, 940, 1140, 1240) based on positions of at least one intersection point (1501) and a node (1403, 1503) included in a graphic pattern password in case the predetermined password is the graphic pattern password.

8. The electronic device (100) of claim 1, wherein the capturer (110) comprises at least one of an optical system (112) and an infrared ray capturer (114).

9. The electronic device (100) of claim 1, wherein the biometric information (710, 810) comprises at least one of a palm line and a blood vessel.

10. A method for an electronic device (100), the method comprising:
acquiring an image (5, 705) comprising at least a part of a user's body;
extracting biometric information (710, 810) of a user from the acquired image (5, 705);
recognizing a segment (620, 820) of a character password from the biometric information (710, 810) in case a predetermined password is the character password, wherein the character password includes at least one of a character and a symbol;
acquiring a password hint (740, 840, 940, 1140, 1240) based on the recognized segment (620, 680) of the character password and the predetermined password; and
overlapping and displaying the password hint (740, 840, 940, 1140, 1240) and the acquired image (5, 705) such that a synthesized character password is displayed.

11. The method of claim 10, wherein the acquiring of the password hint (740, 840, 940, 1140, 1240) comprises acquiring the password hint (740, 840, 940, 1140, 1240) comprising the segment (620, 820) of the predetermined password based on the biometric information (710, 810) and the predetermined password.

12. The method of claim 10, wherein the acquiring of the password hint (740, 840, 940, 1140, 1240) comprises:
synthesizing the biometric information (710, 810) and the character password to match the biometric information (710, 810) and the character password with the recognized segment (620, 820); and
determining the password hint (740, 840, 940, 1140, 1240) based on a part of the synthesized character password excluding a part corresponding to the recognized segment (620, 820).

13. The method of claim 12, wherein the determining of the password hint (740, 840, 940, 1140, 1240) comprises determining the password hint (740, 840, 940, 1140, 1240) when the recognized segment (620, 820) and the password hint (740, 840, 940, 1140, 1240) are simultaneously displayed such that the synthesized character password is displayed.

14. The method of claim 13, wherein the displaying of the password hint (740, 840, 940, 1140, 1240) comprises:
capturing an image (5, 705) comprising the user's body.

## Patentansprüche

1. Elektronische Vorrichtung (100), umfassend:
einen Erfasser (110), der so konfiguriert ist, dass er ein Bild (5, 705) aufnimmt, das zumindest einen Teil eines Körpers eines Benutzers umfasst;
eine Steuereinrichtung (120), die so konfiguriert ist, dass sie biometrische Informationen (710, 810) eines Benutzers aus dem aufgenommenen Bild (5, 705) extrahiert, ein Segment (620, 820) eines Zeichenpasswortes aus den biometrischen Informationen (710, 810) erkennt, falls ein vorgegebenes Passwort das Zeichenpasswort ist, wobei das Zeichenpasswort mindestens eines aus einem Zeichen und einem Symbol einschließt, und einen Passwort-Hinweis (740, 840, 940, 1140, 1240) auf der Grundlage des erkannten Segmentes (620, 680) des Zeichenpasswortes und des vorgegebenen Passwortes aufnimmt; und
einen Bildschirm, der so konfiguriert ist, dass er den Passwort-Hinweis (740, 840, 940, 1140, 1240) und das aufgenommene Bild (5, 705) derart überlappen lässt und anzeigt, dass ein synthetisiertes Zeichenpasswort angezeigt wird.

2. Elektronische Vorrichtung (100) nach Anspruch 1, wobei die Steuereinrichtung (120) so konfiguriert ist, dass sie den Passwort-Hinweis (740, 840, 940, 1140, 1240), der das Segment (620, 820) des vorgegebenen Passwortes umfasst, auf der Grundlage der biometrischen Informationen (710, 810) und des vorgegebenen Passwortes aufnimmt.

3. Elektronische Vorrichtung (100) nach Anspruch 1, wobei die Steuereinrichtung (120) so konfiguriert ist, dass sie die biometrischen Informationen (710, 810) und das Zeichenpasswort so synthetisiert, dass sie die biometrischen Informationen (710, 810) und das Zeichenpasswort mit dem erkannten Segment (620, 820) in Übereinstimmung bringt, und den Passwort-Hinweis (740, 840, 940, 1140, 1240) auf der Grundlage eines Teils des synthetisierten Zeichenpasswortes mit Ausnahme eines dem erkannten Segment (620, 820) entsprechenden Teils bestimmt.

4. Elektronische Vorrichtung (100) nach Anspruch 3, wobei die Steuereinrichtung (120) so konfiguriert ist, dass sie den Passwort-Hinweis (740, 840, 940, 1140, 1240) bestimmt, wenn das erkannte Segment (620, 820) und der Passwort-Hinweis (740, 840, 940, 1140, 1240) gleichzeitig derart angezeigt werden, dass das synthetisierte Zeichenpasswort angezeigt wird.

5. Elektronische Vorrichtung (100) nach Anspruch 4, wobei der Bildschirm so konfiguriert ist, dass er den Passwort-Hinweis (740, 840, 940, 1140, 1240) auf der elektronischen Vorrichtung (100) anzeigt, wenn das erkannte Segment (620, 820) auf einer externen Vorrichtung (200), die von dem Benutzer getragen wird, angezeigt wird.

6. Elektronische Vorrichtung (100) nach Anspruch 1, wobei die Steuereinrichtung (120) so konfiguriert ist, dass sie Positionen eines Schnittpunktes (1501) und eines Knotens (1403, 1503) eines Grafikmusterpasswortes auf der Grundlage von Positionen mindestens eines Schnittpunktes (1501) und eines Knotens (1403, 1503), die in den biometrischen Informationen (710, 810) eingeschlossen sind, bestimmt.

7. Elektronische Vorrichtung (100) nach Anspruch 6, wobei die Steuereinrichtung (120) so konfiguriert ist, dass sie den Passwort-Hinweis (740, 840, 940, 1140, 1240) auf der Grundlage von Positionen mindestens eines Schnittpunktes (1501) und eines Knotens (1403, 1503), die in einem Grafikmusterpasswort eingeschlossen sind, bestimmt, falls das vorgegebene Passwort das Grafikmusterpasswort ist.

8. Elektronische Vorrichtung (100) nach Anspruch 1, wobei der Erfasser (110) mindestens eines aus einem optischen System (112) und einem Infrarotstrahl-Erfasser (114) umfasst.

9. Elektronische Vorrichtung (100) nach Anspruch 1, wobei die biometrischen Informationen (710, 810) mindestens eines aus einer Handlinie und einem Blutgefäß umfassen.

10. Verfahren für eine elektronische Vorrichtung (100), wobei das Verfahren umfasst:
Aufnehmen eines Bildes (5, 705), das zumindest einen Teil eines Körpers eines Benutzers umfasst;
Extrahieren von biometrischen Informationen (710, 810) eines Benutzers aus dem aufgenommenen Bild (5, 705);
Erkennen eines Segmentes (620, 820) eines Zeichenpasswortes aus den biometrischen Informationen (710, 810), falls ein vorgegebenes Passwort das Zeichenpasswort ist, wobei das Zeichenpasswort mindestens eines aus einem Zeichen und einem Symbol einschließt;
Aufnehmen eines Passwort-Hinweises (740, 840, 940, 1140, 1240) auf der Grundlage des erkannten Segmentes (620, 680) des Zeichenpasswortes und des vorgegebenen Passwortes; und
Überlappenlassen und Anzeigen des Passwort-Hinweises (740, 840, 940, 1140, 1240) und des aufgenommenen Bildes (5, 705) derart, dass ein synthetisiertes Zeichenpasswort angezeigt wird.

11. Verfahren nach Anspruch 10, wobei das Aufnehmen des Passwort-Hinweises (740, 840, 940, 1140, 1240) das Aufnehmen des Passwort-Hinweises (740, 840, 940, 1140, 1240), der das Segment (620, 820) des vorgegebenen Passwortes umfasst, auf der Grundlage der biometrischen Informationen (710, 810) und des vorgegebenen Passwortes umfasst.

12. Verfahren nach Anspruch 10, wobei das Aufnehmen des Passwort-Hinweises (740, 840, 940, 1140, 1240) umfasst:
Synthetisieren der biometrischen Informationen (710, 810) und des Zeichenpasswortes, um die biometrischen Informationen (710, 810) und das Zeichenpasswort mit dem erkannten Segment (620, 820) in Übereinstimmung zu bringen; und
Bestimmen des Passwort-Hinweises (740, 840, 940, 1140, 1240) auf der Grundlage eines Teils des synthetisierten Zeichenpasswortes mit Ausnahme eines dem erkannten Segment (620, 820) entsprechenden Teils.

13. Verfahren nach Anspruch 12, wobei das Bestimmen des Passwort-Hinweises (740, 840, 940, 1140, 1240) umfasst: Bestimmen des Passwort-Hinweises (740, 840, 940, 1140, 1240), wenn das erkannte Segment (620, 820) und der Passwort-Hinweis (740, 840, 940, 1140, 1240) gleichzeitig derart angezeigt werden, dass das synthetisierte Zeichenpasswort angezeigt wird.

14. Verfahren nach Anspruch 13, wobei das Anzeigen des Passwort-Hinweises (740, 840, 940, 1140, 1240) umfasst:
Erfassen eines Bildes (5, 705), das den Körper des Benutzers umfasst.

## Revendications

1. Dispositif électronique (100) comprenant :
un moyen de capture (110) configuré pour acquérir une image (5, 705) comprenant au moins une partie d'un corps d'utilisateur ;
un moyen de commande (120) configuré pour extraire des informations biométriques (710, 810) d'un utilisateur à partir de l'image acquise (5, 705), reconnaître un segment (620, 820) d'un mot de passe à caractères à partir des informations biométriques (710, 810) dans le cas où un mot de passe prédéterminé est le mot de passe à caractères, dans lequel le mot de passe à caractères inclut au moins un élément parmi un caractère et un symbole, et acquérir une indication de mot de passe (740, 840, 940, 1140, 1240) sur la base du segment reconnu (620, 680) du mot de passe à caractères et du mot de passe prédéterminé ; et
un moyen d'affichage configuré pour chevaucher et afficher l'indication de mot de passe (740, 840, 940, 1140, 1240) et l'image acquise (5, 705) de telle sorte qu'un mot de passe à caractères synthétisé est affiché.

2. Dispositif électronique (100) selon la revendication 1, dans lequel le moyen de commande (120) est configuré pour acquérir l'indication de mot de passe (740, 840, 940, 1140, 1240) comprenant le segment (620, 820) du mot de passe prédéterminé sur la base des informations biométriques (710, 810) et du mot de passe prédéterminé.

3. Dispositif électronique (100) selon la revendication 1, dans lequel le moyen de commande (120) est configuré pour synthétiser les informations biométriques (710, 810) et le mot de passe à caractères pour faire correspondre les informations biométriques (710, 810) et le mot de passe à caractères avec le segment reconnu (620, 820), et déterminer l'indication de mot de passe (740, 840, 940, 1140, 1240) sur la base d'une partie du mot de passe à caractères synthétisé excluant une partie correspondant au segment reconnu (620, 820).

4. Dispositif électronique (100) selon la revendication 3, dans lequel le moyen de commande (120) est configuré pour déterminer l'indication de mot de passe (740, 840, 940, 1140, 1240) lorsque le segment reconnu (620, 820) et l'indication de mot de passe (740, 840, 940, 1140, 1240) sont affichés simultanément de telle sorte que le mot de passe à caractères synthétisé est affiché.

5. Dispositif électronique (100) selon la revendication 4, dans lequel le moyen d'affichage est configuré pour afficher l'indication de mot de passe (740, 840, 940, 1140, 1240) sur le dispositif électronique (100) lorsque le segment reconnu (620, 820) est affiché sur un appareil externe (200) porté par l'utilisateur.

6. Dispositif électronique (100) selon la revendication 1, dans lequel le moyen de commande (120) est configuré pour déterminer des positions d'un point d'intersection (1501) et d'un nœud (1403, 1503) d'un mot de passe de configuration graphique sur la base de positions d'au moins un point d'intersection (1501) et d'un nœud (1403, 1503) inclus dans les informations biométriques (710, 810).

7. Dispositif électronique (100) selon la revendication 6, dans lequel le moyen de commande (120) est configuré pour déterminer l'indication de mot de passe (740, 840, 940, 1140, 1240) sur la base de positions d'au moins un point d'intersection (1501) et d'un nœud (1403, 1503) inclus dans un mot de passe de configuration graphique dans le cas où le mot de passe prédéterminé est le mot de passe de configuration graphique.

8. Dispositif électronique (100) selon la revendication 1, dans lequel le moyen de capture (110) comprend au moins un moyen parmi un système optique (112) et un moyen de capture à rayons infrarouges (114).

9. Dispositif électronique (100) selon la revendication 1, dans lequel les informations biométriques (710, 810) comprennent au moins un élément parmi une ligne de la paume de main et un vaisseau sanguin.

10. Procédé pour un dispositif électronique (100), le procédé comprenant les étapes consistant à :
acquérir une image (5, 705) comprenant au moins une partie d'un corps d'utilisateur ;
extraire des informations biométriques (710, 810) d'un utilisateur à partir de l'image acquise (5, 705) ;
reconnaître un segment (620, 820) d'un mot de passe à caractères à partir des informations biométriques (710, 810) dans le cas où un mot de passe prédéterminé est le mot de passe à caractères, dans lequel le mot de passe à caractères inclut au moins un élément parmi un caractère et un symbole ;
acquérir une indication de mot de passe (740, 840, 940, 1140, 1240) sur la base du segment reconnu (620, 680) du mot de passe à caractères et du mot de passe prédéterminé ; et
chevaucher et afficher l'indication de mot de passe (740, 840, 940, 1140, 1240) et l'image acquise (5, 705) de telle sorte qu'un mot de passe à caractères synthétisé est affiché.

11. Procédé selon la revendication 10, dans lequel l'acquisition de l'indication de mot de passe (740, 840, 940, 1140, 1240) comprend l'étape consistant à acquérir l'indication de mot de passe (740, 840, 940, 1140, 1240) comprenant le segment (620, 820) du mot de passe prédéterminé sur la base des informations biométriques (710, 810) et du mot de passe prédéterminé.

12. Procédé selon la revendication 10, dans lequel l'acquisition de l'indication de mot de passe (740, 840, 940, 1140, 1240) comprend les étapes consistant à :
synthétiser les informations biométriques (710, 810) et le mot de passe à caractères pour faire correspondre les informations biométriques (710, 810) et le mot de passe à caractères avec le segment reconnu (620, 820) ; et
déterminer l'indication de mot de passe (740, 840, 940, 1140, 1240) sur la base d'une partie du mot de passe à caractères synthétisé excluant une partie correspondant au segment reconnu (620, 820).

13. Procédé selon la revendication 12, dans lequel la détermination de l'indication de mot de passe (740, 840, 940, 1140, 1240) comprend l'étape consistant à déterminer l'indication de mot de passe (740, 840, 940, 1140, 1240) lorsque le segment reconnu (620, 820) et l'indication de mot de passe (740, 840, 940, 1140, 1240) sont affichés simultanément de telle sorte que le mot de passe à caractères synthétisé est affiché.

14. Procédé selon la revendication 13, dans lequel l'affichage de l'indication de mot de passe (740, 840, 940, 1140, 1240) comprend l'étape consistant à :
capturer une image (5, 705) comprenant le corps d'utilisateur.
